# FASCICULE DE BREVET EUROPEEN

(11) **EP 1 878 663 B1**
(45) Date de publication et mention de la délivrance du brevet: **08.09.2010**
(21) Numéro de dépôt: 07112065.3
(22) Date de dépôt: 09.07.2007
(51) Int. Cl.: B64G 1/58, F16L 59/02

(54) **Panneau d'isolation thermique de reservoirs cryotechniques**
Wärmeisolierplatte für kryotechnische Tanks
Thermal insulation panel for cryogenic reservoirs

(30) Priorité: 10.07.2006 FR 0652893
(43) Date de publication de la demande: 16.01.2008
(73) Titulaire: Cryospace l'air liquide aerospatiale, 78130 Les Mureaux (FR)
(72) Inventeur: Cargnello, Rémo, 78130, LES MUREAUX (FR); Marion, Yaël, 78210, SAINT-CYR L'ECOLE (FR)
(74) Mandataire: Poulin, Gérard

(56) Documents cités:
- FR-A- 2 876 438
- US-A1- 3 270 802

## Description

### DOMAINE TECHNIQUE

La présente invention concerne des panneaux d'isolation thermique de réservoirs cryotechniques. Elle s'applique en particulier à l'isolation thermique de réservoirs cryotechniques de lanceurs, et notamment pour l'isolation thermique de réservoirs cryotechniques à paroi mince pour lanceurs de type Ariane 5 et pour lanceurs réutilisables.

### ÉTAT DE LA TECHNIQUE ANTÉRIEURE

L'environnement externe d'un réservoir cryotechnique monté sur un lanceur et rempli d'ergols cryogéniques est caractéristique à deux phases fonctionnelles bien spécifiques, l'une au sol et l'autre en vol. En phase d'attente au sol, les charges thermiques comprennent les échanges par rayonnement des parois externes avec le sol et l'atmosphère (émission infrarouge), l'éclairement solaire (direct, diffusé par l'atmosphère, et réfléchi par le sol) ainsi que les échanges par convection avec l'air ambiant. Pendant la phase de vol, l'étage est soumis aux flux aérothermiques lors de la traversée de l'atmosphère. Enfin, l'étage est soumis aux flux de rayonnements spatiaux (terre, soleil, albédo) lors de sa phase balistique.

Pour protéger les réservoirs cryotechniques de cet environnement, on les isole extérieurement afin de maintenir les ergols à leur état liquide, notamment l'hydrogène à 20 K et l'oxygène à 90 K.

Ces isolations, appliquées sous plusieurs formes bien connues actuellement, sont réalisées avec des matériaux de faible conductivité thermique permettant de répondre aux besoins spécifiques de chacune des phases de la mission du lanceur, sans trop pénaliser sa masse totale. Il existe de nombreux matériaux de faible densité et de résistance thermique élevée. Néanmoins le problème majeur est leur application sur les parois minces des réservoirs, de façon fiable, prévisible et reproductible.

Outre leurs caractéristiques mécaniques, la pénétration de gaz condensables a un impact important sur leur efficacité thermique réelle. Par ailleurs, en plus de limiter les flux de chaleur entrants, ces protections thermiques doivent permettre les mouvements de la peau du réservoir et supporter les charges d'accélération soumises au lanceur.

Comme il est décrit dans le document FR-A-2 876 438, l'usage pour isoler les réservoirs cryotechniques est d'utiliser principalement des mousses rigides à cellules fermées. Parmi celles-ci, on retient les matériaux en polychlorure de vinyle, en polyuréthanne chargées ou non de verre, en polyisocyanurate et phénolique. On peut également citer les mousses à base de résines polystyréniques. Cependant, ces mousses de polystyrène, sont des mousses rigides peu utilisées en cryogénie, car leurs propriétés thermiques ne sont pas excellentes et elles sont très perméables à la vapeur d'eau. En effet, dans le cas d'une isolation externe, il est nécessaire de prévoir un système capable d'exclure l'air et l'humidité de l'isolant. Lors du lancement, l'air et l'humidité piégés dans l'isolant induisent un risque de condensation et de gel occasionnant des dommages de la protection thermique. Plus précisément, lors du remplissage des réservoirs, les gaz situés aux abords de la paroi froide se condensent, créant un gradient de densité dans l'épaisseur de l'isolant (ce qui, par la même occasion, augmente la conductivité thermique de l'isolation). Pendant la montée en atmosphère du lanceur, des augmentations locales de pression peuvent alors survenir dans le matériau isolant. Lorsque cette pression devient supérieure à la limite élastique du matériau, il y a spallation (gonflement des cellules, puis éclatement). C'est pour cela que les problèmes de cryopompage sont résolus en grande partie par l'utilisation de mousses à cellules fermées et souples.

Le choix de l'une de ces mousses organiques, utilisées pour effectuer l'isolation externe d'un réservoir cryotechnique, est très important car plus la masse de la mousse est élevée, plus les charges d'accélération soumises au lanceur conduisent à des défauts d'adhérence, et de ce fait à des pertes d'isolation. Ces pertes d'isolation (l'isolation étant généralement fabriquée sous forme de panneaux puis collée selon des spécifications adéquates) doivent être absolument évitées surtout si l'isolation protège thermiquement un réservoir contenant de l'hydrogène liquide. En effet, d'importants flux thermiques, directement en contact sur cette surface démunie d'isolation, auraient pour conséquence rapide et forte augmentation de la valeur de pressurisation du réservoir, et plus précisément, à une valeur de pression supérieure à la limite de rupture de la structure du réservoir qui est due en grande partie à la perte des caractéristiques mécaniques, localisée au niveau du manque de protection, du matériau subissant un réchauffement.

Pour réduire ces défauts, l'adhérence de l'isolation sur son support doit être supérieure à la contrainte de rupture donnée par la mousse, surtout dans le cas de matériaux à faible tenue à la traction. Cette masse d'isolation peut être réduite en optimisant son épaisseur qui est généralement aux alentours de 20 mm, compte tenu de la faible dispersion de la conductivité thermique à 20 K des différents matériaux utilisés actuellement et/ou sa masse volumique qui est comprise entre 50 et 80 kg/m³. Par ailleurs, ces matériaux sont tous caractérisés par une faible différence de contraction thermique entre 293 K et 20 K. Leur valeur se situe entre 30 et 40.10⁻⁶ mm contre 15.10⁻⁶ mm, par exemple pour l'alliage utilisé pour la fabrication des réservoirs du lanceur Ariane 5.

Ces mousses rigides à cellules fermées sont donc légèrement différentes et se complètent assez bien. Mais elles ne répondent pas entièrement à tous les besoins escomptés à ce jour pour protéger certains réservoirs de lanceurs à usage cryogénique. Il existe donc un besoin pour une nouvelle technique d'isolation thermique apportant plus d'avantages, surtout en réduisant la différence de contraction thermique entre la structure porteuse de l'isolation et la protection thermique, afin de limiter les contraintes imposées à cette dernière dès la mise en froid du réservoir cryotechnique.

### EXPOSÉ DE L'INVENTION

La présente invention a été conçue pour permettre une isolation efficace de réservoirs cryogéniques de lanceurs, ces réservoirs possédant des parois minces. Ce type de réservoir est celui utilisé sur le lanceur Ariane 5.

L'invention a donc pour objet un panneau d'isolation thermique de réservoirs cryotechniques, comprenant un matériau constitué d'une mousse rigide à cellules fermées en polyuréthanne, renforcée par des fibres de verre, caractérisé en ce que les fibres de verre ont une longueur moyenne supérieure à 10 mm.

Les fibres de verre peuvent être présentes dans le matériau en une quantité telle que la densité du matériau est de l'ordre de 80 kg/m³. Elles peuvent représenter 10% du poids du matériau.

### EXPOSÉ DÉTAILLÉ DE MODES DE RÉALISATION PARTICULIERS

L'invention a pour objet une isolation constituée d'une mousse à cellules fermées en polyuréthanne, limitant l'entrée des flux thermiques externes au lanceur spécifiques à chacune des phases de sa mission, et plus précisément, dès le début de sa mise en oeuvre (remplissage des réservoirs en ergols).

Selon l'invention, l'isolation utilisable en particulier sur le réservoir principal cryotechnique d'Ariane 5 est constituée de mousse rigide à cellules fermées en polyuréthanne, renforcée de fibres de verre et ayant une densité de l'ordre de 80 kg/m³. Certaines applications connues utilisent des polyuréthannes armés de fibres de verre courtes. Selon l'invention, ce ne sont pas des fibres courtes qui sont utilisées, mais des fibres longues modifiant les caractéristiques mécaniques de la protection thermique de façon surprenante. La longueur moyenne des fibres de verre dans le matériau selon l'invention est supérieure à 10 mm. Le plus important est que ce matériau, renforcé de longues fibres de verre, fait chuter la contraction thermique entre 293 K et 20 K à une valeur de 20.10⁻⁶ mm, soit une forte diminution de la contraction thermique par rapport aux matériaux actuellement utilisés qui possèdent des valeurs de 3 à 4 fois plus élevées.

Cette amélioration apporte une diminution des efforts hyperstatiques (contraintes très sévères lors de la mise en froid et pressurisation du réservoir) que subit l'isolation lors de la phase au sol et en vol du lanceur.

La différence de contraction thermique entre cette isolation et le matériau de la structure du réservoir cryotechnique est donc limitée du fait de la faible contraction thermique de l'isolation. Ce qui n'est pas le cas avec les mousses existantes, même avec des mousses en polyétherimide qui sont actuellement les meilleures. Ainsi, l'intérêt que représente cette isolation, sur un lanceur réutilisable, n'est pas moindre, car la limitation des contraintes augmente la tenue en cyclage et de ce fait la durée de vie du réservoir cryotechnique.

Pour procéder à l'isolation selon l'invention, la mousse rigide à cellules fermées en polyuréthanne armée de longues fibres de verre est collée, sur la paroi externe du réservoir cryotechnique, de façon identique aux mousses employées jusqu'à présent, plus précisément avec les mêmes adhésifs et procédés de mise en oeuvre. Comme précédemment décrit, l'adhérence des protections thermiques sur les réservoirs cryotechniques est primordiale pour mener à bien la mission du lanceur. Aussi, les adhésifs capables d'adhérer sur un substrat à une température de 20 K sont très rares et de plus qualifiés avec de faibles marges positives. Compte tenu de ces valeurs contraignantes, on explique alors, pour garantir un collage satisfaisant, le besoin d'appliquer des spécifications de procédés particulièrement bien adaptées aux exigences fonctionnelles d'un réservoir cryotechnique monté sur un véhicule spatial. D'où l'intérêt d'augmenter ces marges de ruptures adhésives en diminuant le plus possible les contraintes que subit le collage de l'isolation, lorsque l'on applique sur le réservoir cryotechnique des efforts hyperstatiques. Ce qui est valable aujourd'hui le sera encore plus demain, car les adhésifs actuellement utilisés sont menacés d'obsolescence par les Directives Européennes de plus en plus sévères concernant l'environnement, qui ont pour objectif la suppression d'un grand nombre de COV (Composé Organique Volatil) classés CMR (Cancérigène, Mutagène et toxique pour la Reproduction).

Cependant, l'utilisation d'une telle mousse à cellules fermées implique une hausse de la densité d'environ 10%. Cette augmentation est liée aux fibres de verre (fibres longues) qui ont été ajoutées avant l'expansion du polyuréthanne, lors de sa fabrication. Malgré cet inconvénient, des essais ont démontré qu'il est possible d'obtenir une telle mousse renforcée ne dépassant pas 80 kg/m³, ce qui correspond à une valeur limite mais encore acceptable pour de telles isolations employées dans le domaine de l'aéronautique ou du spatial. Aussi il est vrai, que généralement les mousses à cellules fermées existantes sur les réservoirs cryotechniques sont comprises entre 55 et 70 kg/m³.

Cependant, l'ajout de ces longues fibres de verre permet de se dispenser, dans certaines zones de protubérances soumises aux flux aérothermiques, de protections thermiques supplémentaires. Ce gain peut ramener la mousse renforcée à cellules fermées, selon l'invention, à une valeur comparative de 75 kg/m³. De façon comparable, le matériau utilisé, selon l'invention, possède une conductivité thermique comparable aux autres matériaux existants et actuellement utilisés, qui est de l'ordre de 3 mW/m/K. Cette valeur, de conductivité thermique, dimensionne l'épaisseur de l'isolation aux alentours de 15 à 25 mm selon le type de réservoir (oxygène ou hydrogène) avec une forte augmentation des caractéristiques mécaniques (contraintes à la rupture en traction et cisaillement) due à l'ajout des longues fibres de verre.

Comme déjà mentionné auparavant, l'ajout des longues fibres de verre dans le polyuréthanne contribue à améliorer les caractéristiques de la protection thermique, telle que sa résistance mécanique. Ces améliorations de propriétés mécaniques, dépendent du choix des fibres de verre, de sa géométrie (diamètre, masse linéique) et de son ensimage constituant indispensable à la fabrication des fibres et à leur utilisation, aussi bien lors de la mise en oeuvre que pour optimiser les performances du matériau. Aussi, à titre d'exemple illustratif et non limitatif, on décrira dans ce document une forme de réalisation préférentielle selon l'invention.

De ce fait, la mousse rigide à cellules fermée en polyuréthanne renforcée de longues fibres de verre, présente à densité équivalente une contrainte de rupture en traction, à température ambiante, allant sensiblement de 2,1 MPa à 2,7 MPa, par exemple de l'ordre de 2,4 MPa, en comparaison de 1,7 MPa pour une mousse rigide en polyétherimide, 1 MPa pour les polychlorure de vinyle et 0,8 MPa pour les polyuréthannes sans ajout de fibres. A basses températures, sa tenue en traction est sensiblement améliorée de 0,3 MPa. Cette bonne propriété mécanique facilite l'intégration d'équipements qui pour la plupart des cas peuvent être collés directement sur la protection thermique, ce qui présente de nombreux avantages. Certaines interfaces mécaniques sur lesquelles on vient visser des équipements sont supprimées. Il en résulte un gain de masse par le biais d'une fixation simple et moins onéreuse tout en évitant des ponts thermiques avec la structure porteuse, ainsi que des risques de cryopompage de l'air, entraînant une liquéfaction et des échanges de chaleur plus importants.

Enfin, la mousse rigide à cellules fermées en polyuréthanne renforcée de longues fibres de verre présente un autre avantage, non négligeable pour ce type d'application. En effet, 10 % en poids de fibres longues, parfaitement réparties dans la matrice du matériau, confèrent à l'isolation une meilleure résistance au phénomène d'ablation engendré par les flux aérothermiques pendant la phase propulsée du lanceur. Cet avantage a donc pour conséquence de limiter les entrées thermiques dues normalement à une diminution de l'épaisseur de la protection thermique dans les zones courantes (hors zones de protubérances), qui représente environ 70 % de la surface isolée d'un réservoir cryotechnique. Aussi, en évitant cette baisse des caractéristiques thermiques, en zone courante, liée à la dégradation de l'isolation par les flux aérothermiques, on peut mieux appréhender les définitions de ces protections pouvant éventuellement servir sur des lanceurs de type réutilisable destinés à réaliser plusieurs missions de vol.

On va maintenant décrire un mode réalisation qui a été développé spécialement pour l'isolation de l'ensemble propulsif cryogénique du lanceur Ariane 5, et plus spécialement pour réduire la différence de contraction thermique entre l'isolant et le substrat (structure porteuse).

Conformément à l'invention, il est proposé d'assurer la protection thermique de l'extérieur du réservoir à paroi mince par une mousse rigide à cellules fermées en polyuréthanne renforcée de longues fibres de verre.

Ainsi, dans cette forme de réalisation préférentielle de l'invention, l'isolation se présente sous la forme de panneaux directement collés sur la paroi externe du réservoir, à l'aide d'un adhésif époxy et d'un sac à vide.

A titre d'exemple illustratif et non limitatif, les épaisseurs de ces panneaux sont avantageusement comprises entre 15 et 25 mm.

Dans un premier temps, on prépare la surface métallique que l'on désire protéger thermiquement. Cette préparation de surface a pour objet de donner à ladite surface une tension superficielle suffisante pour assurer une adhérence optimale d'un primaire d'accrochage. Elle peut prendre différentes formes bien connues de l'homme du métier. Elle consiste généralement en une opération de dégraissage alcalin et en une opération de décapage sulfochromique pour les alliages d'aluminium, suivies d'un rinçage à l'eau déminéralisée. Cette préparation de surface du substrat peut s'effectuer à l'aide d'un émerisage à l'aide d'un papier abrasif de grade fin, ou encore de sablage au corindon de faible granulométrie, pour éviter de dégrader la structure métallique.

Dans un délai aussi court que possible (généralement moins de 8 heures) afin d'éviter une nouvelle pollution de la surface, l'étape de préparation de la surface est suivie d'une opération de projection d'un primaire d'accrochage. Cette opération améliore l'adhérence de l'adhésif utilisé ensuite pour fixer l'isolation. Le primaire est avantageusement un époxy choisi principalement pour conserver ses propriétés jusqu'a une température cryogénique d'environ 20 K. A titre d'exemple illustratif et non limitatif, ce primaire peut être formulé avec du PZ820/HZ820 (fournisseur SODIEMA). L'épaisseur du film est avantageusement comprise entre 10 et 50 micromètres, sachant que son épaisseur optimale est d'environ 20 micromètres.

On colle ensuite sur la surface ainsi préparée et revêtue du primaire les panneaux aux emplacements préalablement définis avec un adhésif apte à supporter les températures cryogéniques sans perdre son intégrité. Cet adhésif doit en outre être compatible avec les matériaux dont il assure le collage.

Afin de satisfaire simultanément à toutes ces conditions, le film d'adhésif est réalisé au moyen d'une colle de la famille des époxydes telle que « l'Araldite » (marque déposée) AY103/HY953F de la société VANTICO. Ainsi cet adhésif adhère à la structure à température ambiante ainsi qu'aux températures cryogéniques tout en étant chimiquement compatible avec la protection thermique. L'application de l'adhésif s'effectue à l'aide d'un tissu de verre imprégné de colle, puis bobiné directement sur le réservoir. La masse de colle à déposer est avantageusement comprise entre 150 et 200 g/m². Cependant, il est préférable de s'approcher le plus possible des 150 g/m², car le système ne doit pas être trop pénalisant en terme de masse. La masse du tissu de verre est avantageusement comprise entre 30 et 40 g/m² et sa largeur est d'environ un mètre pour une facilité de mise en oeuvre. Après avoir posé les panneaux sur la structure, on les maintient ensuite sous une dépression de 0,7 bar à l'aide d'un sac à vide pendant une durée d'environ 36 heures, temps nécessaire à la colle pour polymériser.

Après cette polymérisation, on dépose le sac à vide pour s'assurer du bon collage des panneaux ainsi que de la présence de colle au niveau des joints inter-panneaux. Un joint sans colle pourrait conduire à un phénomène de cryopompage de l'air lors de la mise en froid du réservoir, pouvant éventuellement endommager l'isolation. Le jeu toléré entre chaque panneau doit être aux alentours d'un millimètre. A la température de 20 K, la colle garantit au minimum une tenue en cisaillement de 3 MPa, ce qui est conservatif par rapport à la valeur de contrainte du matériau isolant qui est légèrement inférieure à cette valeur soit 2,7 MPa. De ce fait, un équipement collé directement sur l'isolation et qui possède, à titre indicatif, une surface de collage de 10 cm² peut tenir à un effort à l'arrachement d'environ 2700 N. Cette valeur correspond au minimum à un facteur de l'ordre de 3 comparativement à une isolation en mousse rigide à cellules fermées en polychlorure de vinyle. Ce qui, compte tenu de ses meilleures propriétés mécaniques, donne plus de choix sur le type de fixation des équipements tout en offrant la possibilité de réduire les flux de conduction dus à l'environnement interne de la structure porteuse. Aussi, pendant la phase de remplissage au sol du réservoir cryotechnique, ainsi qu'aux efforts généraux supportés par le lanceur en vol, l'isolation ainsi réalisée permet les mouvements de la peau du réservoir dus aux efforts hyperstatiques (contractions thermiques et pressurisation des réservoirs) avec un minimum de contrainte dû principalement à la faible déformation du matériau qui donne une valeur de la contraction thermique de 20.10⁻⁶ mm entre 293 K et 20 K.

Lors de la fabrication de l'isolation selon l'invention, les fibres de verre se présentent initialement sous la forme de rouleaux. Il ne s'agit pas à proprement parler de tissé puisque l'orientation des fibres longues est aléatoire et non organisée. La répartition des fibres longues est d'ailleurs effectuée en trois dimensions. Chaque pli extrait directement du rouleau possède une épaisseur de 5 mm. Dans la direction de l'épaisseur des plis, la répartition des fibres est aussi aléatoire. A titre d'illustration, l'isolation peut être basée sur 8 couches de fibres, à savoir un matelas de 40 mm d'épaisseur à travers lequel on fait expanser la mousse polyuréthanne (PUR). Il en résulte alors un pain de mousse de 200 mm de hauteur, à l'intérieur duquel les fibres occupent la totalité de la hauteur. Les couches de fibre s' expansent de 5 mm à 25 mm avec le passage de la mousse lors de son expansion au travers des couches. Cette mousse donne une masse volumique apparente de 120 kg/m³. Des essais ont permis, avec une mise en oeuvre identique mais en faisant varier les paramètres de projection de la matrice, d'obtenir des isolants ayant une masse volumique apparente de 80 kg/m³ et présentant des caractéristiques thermiques et mécaniques conformes à l'invention. Les fibres continues de verre sont de qualité E, mais peuvent avantageusement être de type R ou S, afin d'obtenir de meilleures propriétés mécaniques que celles que l'on vient d'énoncer. Enfin, pour assurer la compatibilité entre le verre (fibres longues) et la matrice (PUR), un ensimage utilisé comme agent de pontage est appliqué à la surface des fibres de verre après leur sortie de la filière. Cet ensimage est avantageusement un silane, pour assurer la liaison chimique entre le verre et la matrice et, de ce fait, renforce les propriétés mécaniques et la tenue au vieillissement du matériau.

Le matériau d'isolation, selon l'invention, est expansé à l'aide du cyclopentane et présente une conductivité à l'ambiante aux alentours de 30 mW/m/K. A la température de 20 K, température de l'hydrogène liquide, cette conductivité passe aux alentours de 3 mW/m/K, ce qui garantit la limitation du flux thermique entrant dans les ergols cryogéniques. Aussi, selon la norme en vigueur, sa prise d'humidité ne dépasse pas les 24 g/m²/24 heures et reste parfaitement imperméable à l'eau et à la moisissure.

## Revendications

1. Panneau d'isolation thermique de réservoirs cryotechniques, comprenant un matériau constitué d'une mousse rigide à cellules fermées en polyuréthanne, renforcée par des fibres de verre, **caractérisé en ce que** les fibres de verre ont une longueur moyenne supérieure à 10 mm.

2. Panneau d'isolation thermique selon la revendication 1, **caractérisé en ce que** les fibres de verre sont présentes dans le matériau en une quantité telle que la densité du matériau est de l'ordre de 80 kg/m³.

3. Panneau d'isolation thermique selon la revendication 1, **caractérisé en ce que** les fibres de verre représentent 10% du poids du matériau.

4. Panneau d'isolation thermique selon la revendication 1, **caractérisé en ce que** les panneaux ont une épaisseur comprise entre 15 mm et 25 mm.

## Claims

1. A heat insulation panel for cryogenic reservoirs comprising a material consisting of rigid polyurethane foam with closed cells, reinforced by glass fibres, **characterized in that** the glass fibres have an average length greater than 10 mm.

2. The heat insulation panel according to claim 1, **characterized in that** the glass fibres are present in the material in an amount so that the density of the material is of the order of 80 kg/m³.

3. The heat insulation panel according to claim 1, **characterized in that** the glass fibres account for 10% of the weight of the material.

4. The heat insulation panel according to claim 1, **characterized in that** the panels have a thickness between 15 mm and 25 mm.

## Patentansprüche

1. Thermische Isolierplatte für kryotechnische Behälter, umfassend ein Material, das durch einen festen Schaum mit geschlossenen Zellen aus Polyurethan gebildet ist, der durch Glasfaser verstärkt ist, **dadurch gekennzeichnet, dass** die Glasfasern eine durchschnittliche Länge von mehr als 10 mm aufweisen.

2. Thermische Isolierplatte nach Anspruch 1, **dadurch gekennzeichnet, dass** die Glasfasern in dem Material in einer derartigen Menge vorhanden sind, dass die Dichte des Materials in der Größenordnung von 80 kg/m³ ist.

3. Thermische Isolierplatte nach Anspruch 1, **dadurch gekennzeichnet, dass** die Glasfasern 10% des Gewichts des Materials repräsentieren.

4. Thermische Isolierplatte nach Anspruch 1, **dadurch gekennzeichnet, dass** die Platten eine Dicke aufweisen, die zwischen 15 mm und 25 mm enthalten ist.
